# FASCICULE DE BREVET EUROPEEN

(11) **EP 1 216 867 B1**
(45) Date de publication et mention de la délivrance du brevet: **21.03.2007**
(21) Numéro de dépôt: 01403242.9
(22) Date de dépôt: 14.12.2001
(51) Int. Cl.: B60J 5/04

(54) **Porte de véhicule automobile avec système de retenue de bandeau**
Fahrzeugtür mit Türblatt-Klemmvorrichtung
Vehicle door with door leaf wedging device

(30) Priorité: 19.12.2000 FR 0016538
(43) Date de publication de la demande: 26.06.2002
(73) Titulaire: Renault s.a.s., 92100 Boulogne Billancourt (FR)
(72) Inventeur: Curbilie, Pascal, 95250 Beauchamp (FR)

(56) Documents cités:
- EP-A- 0 640 504
- EP-A- 0 754 582
- EP-A- 0 818 339
- DE-U- 9 302 344
- US-A- 5 137 325

## Description

L'invention concerne un véhicule automobile, comportant un montant d'habitacle et une porte, la porte comportant un renfort de bandeau de porte, et en particulier un système de retenue du renfort de bandeau en cas de choc frontal sur le véhicule.

Sur les véhicules actuels, les portes, et en particulier les portes avant, comportent des renforts de bandeau dans un caisson de porte pour renforcer mécaniquement les portes. L'habitacle du véhicule comporte des montants, ou pieds, entre lesquels les portes sont montées. Par exemple, une porte avant est montée entre un pied avant sur laquelle elle est articulée, et un pied milieu. Le renfort de bandeau permet à la porte de mieux résister à des chocs latéraux, mais également participe à la résistance globale de l'habitacle du véhicule. En effet, en cas de choc frontal sur le véhicule, des efforts sont créés qui tendent à rapprocher les pieds avant et milieu. Cependant, le renfort de bandeau est interposé entre les deux pieds et résiste ainsi à la déformation de l'habitacle.

Les portes comportent en général une partie pleine inférieure et une partie vitrée supérieure. La partie pleine comporte un caisson en tôle. La technique actuelle de fabrication du renfort de bandeau est de réaliser des renforts de bandeau en tôle d'acier emboutie et soudés dans le caisson. Le renfort est par exemple un tube de section rectangulaire.

Un véhicule selon le préambule de la revendication 1 est connu de EP 818339 A.

Pour que le renfort de bandeau remplisse son rôle de renfort d'habitacle, il faut éviter que la porte ne s'ouvre lors du choc frontal. Pour cela, le bandeau comporte une tôle d'appui à l'extrémité du bandeau proche du pied milieu. Cette tôle d'appui ferme le bandeau en biseau, de telle sorte que la tôle d'appui soit saillante le long d'une face du bandeau du côté intérieur de l'habitacle. En cas de choc frontal, la tôle d'appui appuie sur une surface assez large du pied milieu et y crée une déformation peu profonde et complémentaire au biseau, et pour que le renfort de bandeau tende à glisser vers l'intérieur du véhicule. Mais la porte est bloquée par une surface de battement. Elle n'a donc pas tendance à s'échapper ni vers l'intérieur, ni vers l'extérieur. De plus, après que le choc frontal a eu lieu, il suffit d'un effort limité pour obtenir l'ouverture de la portière. Cet effort limité est prédéterminé par des normes d'essai pour des conditions de choc frontal également prédéterminées.

Pour alléger le véhicule, il a été proposé de réaliser le bandeau en profilé d'alliage léger, par exemple en aluminium. Cependant, la coupe des profilés est de préférence droite. Ainsi, la tôle d'appui ne comporte pas de pente et ne garantit pas que la porte ne s'échappera pas lors d'un choc frontal. De plus, le profilé aluminium n'est en général pas suffisamment dur pour créer une déformation sur le pied milieu en acier.

L'invention se propose donc de fournir une porte comportant un renfort de bandeau en profilé d'alliage léger avec une coupe droite, la porte ne pouvant pas s'échapper lors d'un choc frontal, l'ouverture de la porte pouvant être obtenue avec un effort limité après un choc frontal prédéterminé.

L'invention a pour objet un véhicule automobile selon la revendication 1.

Grâce à l'invention, la porte ne peut pas s'échapper lors d'un choc frontal. La porte selon l'invention est montée sur un habitacle de véhicule, avec un sens d'ouverture vers l'extérieur de l'habitacle, entre deux montants d'habitacle. En cas de choc frontal, le renfort de bandeau est comprimé entre les deux montants. Il pousse alors en particulier sur la tôle d'appui et celle-ci vient appuyer sur le montant d'habitacle. Comme le pion est proéminent par rapport à la tôle d'appui, ledit pion s'enfonce dans le montant plus profondément que la tôle d'appui, en réalisant une empreinte dans le montant. Pendant le choc, la collaboration entre le pion et l'empreinte reprend d'éventuels efforts latéraux et empêche que la tôle d'appui ne glisse à côté du premier montant. Si le renfort de bandeau glisse par rapport à la tôle d'appui, il se trouve finalement bloqué par le corps du pion logé dans l'alvéole.

Après la fin du choc, les tensions sur le renfort de bandeau ont diminué, voire disparu. En conséquence, la force de maintien de la tête du pion dans l'empreinte est également diminuée. Ainsi, l'opposition à l'ouverture de la porte est réduite, voire nulle.

Selon une caractéristique particulière, la porte est une porte avant.

De préférence, la tête du pion est bombée. Ainsi, après le choc, la tête se dégage plus facilement de l'empreinte.

Selon une autre caractéristique, le pion est une vis et le corps du pion est un écrou fixé sur la tôle d'appui et dans lequel la vis est vissée. La fixation du pion est ainsi facilitée.

L'invention sera mieux comprise et d'autres particularités et avantages apparaîtront à la lecture de la description qui va suivre, la description faisant référence aux dessins annexés parmi lesquels :
- la figure 1 est une vue partielle en section d'une porte et d'un montant conforme à l'invention ;
- la figure 2 est une vue similaire à la figure 1, pendant un choc frontal.

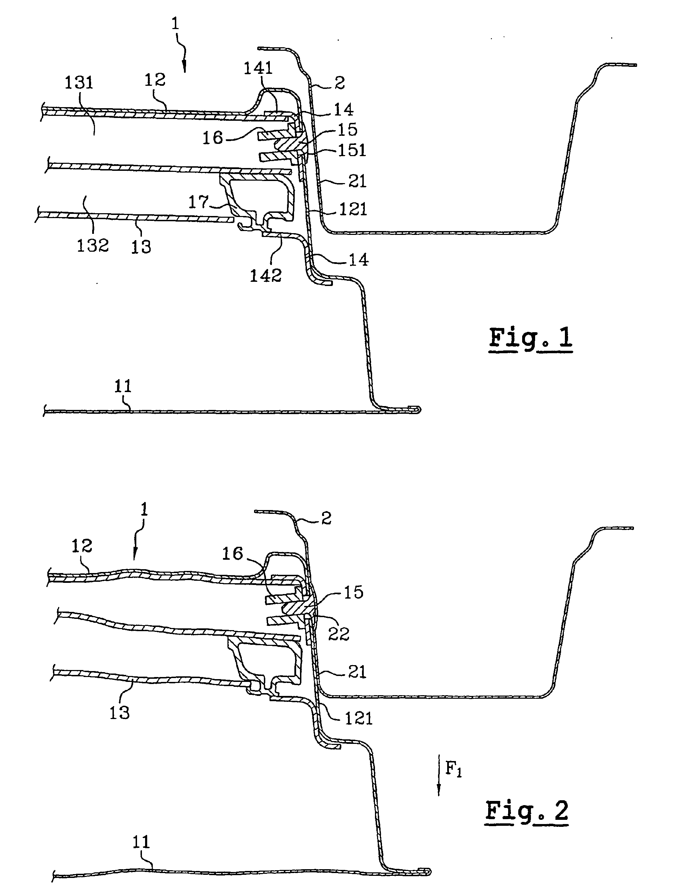

Une réalisation conforme à l'invention est montrée sur la figure 1. Un habitacle de véhicule (non montré) comporte un montant ou pied milieu 2 sensiblement vertical, montré en section sur la figure 1. Une porte 1, montée pivotante sur un autre montant ou pied avant, non montré, est placée le long d'une face 21 du montant 2 lorsqu'elle est fermée, comme montré sur la figure 1.

La porte 1 comporte un panneau extérieur 11 du côté extérieur du véhicule. Elle comporte également un panneau intérieur 12 qui se prolonge par un bord périphérique 121 jusqu'au panneau extérieur. Les panneaux extérieur 11 et intérieur 12 sont fixés ensembles pour former un caisson.

Un renfort de bandeau 13 en profilé d'alliage léger est placé le long du panneau intérieur, dans une direction sensiblement horizontale, jusqu'à proximité immédiate du bord périphérique 121. Le renfort de bandeau comporte deux rangées d'alvéoles, dont une alvéole 131 de la première rangée et une alvéole 132 de la deuxième rangée sont visibles sur la figure 1.

La porte 1 comporte dans le prolongement de la deuxième rangée d'alvéoles un cadre 17 qui se prolonge le long de la périphérie d'une partie vitrée de la porte. Une tôle d'appui 14 est interposée entre l'extrémité du renfort de bandeau 13 et le bord périphérique 121 du panneau intérieur 12. La tôle d'appui 14 comporte un retour 141 et une patte 142 qui enserrent le renfort de bandeau 13 et le cadre 17. Une vis 15 à tête 151 bombée, de préférence en acier, traverse un trou réalisé dans le bord périphérique 121 et la tôle d'appui 14. Un écrou 16 fixé sur la tôle d'appui 14 reçoit la vis 15. L'écrou 16 est logé ainsi dans l'alvéole 131 du renfort de bandeau 13.

En cas de choc frontal, un effort de compression apparaît qui tend à rapprocher le pied avant et le pied milieu. La porte 1 est donc comprimé entre les deux pieds. Le renfort de bandeau transmet des efforts par son extrémité à la tôle d'appui, et ainsi au bord périphérique 121. Comme le montre la figure 2, le caisson de la porte vient en contact avec le pied milieu 2 sur la face 21. Comme la tête 151 de la vis 15 est proéminente par rapport au bord périphérique 121 et que celui-ci est soutenu par la tôle d'appui, la tête 151 réalise une empreinte 22 dans la face 21.

Cette empreinte, dans laquelle la tête 151 est parfaitement insérée, réalise ainsi un blocage latéral et empêche tout mouvement de la porte dans le sens de la flèche F1. De même, le profilé 13 est bloqué par la présence de l'écrou 16 dans l'alvéole 131. Le renfort de bandeau 13 est forcé de rester entre les montants d'habitacle et participe ainsi pleinement à la résistance globale de l'habitacle.

L'invention n'est pas limitée au mode de réalisation qui vient d'être décrit uniquement à titre d'exemple. On pourra en particulier envisager d'autres manières de réaliser et de fixer un pion, par exemple par sertissage ou par soudure.

## Revendications

1. Véhicule automobile, comportant un montant d'habitacle (2) et une porte (1), la porte (1) comportant :
- une partie pleine en forme de caisson (11, 12),
- un renfort de bandeau (13) en profilé d'alliage léger fixé dans le caisson dans une direction sensiblement horizontale, -une tôle d'appui (14) à une extrémité du profilé (13), la tôle étant à proximité du montant d'habitacle (2),
**caractérisé en ce que** la porte (1) comporte en outre un pion (15, 16) fixé sur la tôle d'appui (14), le pion (15, 16) comportant une tête proéminente (151) du côté extérieur au caisson en regard du montant d'habitacle (2), la tôle d'appui étant apte à faire butée contre le montant d'habitacle (2) et la tête (151) du pion (15, 16) étant apte à réaliser une empreinte (22) dans le montant d'habitacle (2) en cas de rapprochement élastique du caisson (11, 12) et du montant d'habitacle (2) dû à un choc sur le véhicule, pour établir une liaison temporaire lors du choc entre la porte (1) et le montant de l'habitacle (2).

2. Véhicule selon la revendication 1, **caractérisé en ce que** la porte (1) est une porte avant.

3. Véhicule selon la revendication 1, **caractérisé en ce que** la tête (151) du pion est bombée.

4. Véhicule selon la revendication 1, **caractérisé en ce que** le renfort de bandeau (13) comporte au moins une alvéole (131), le pion comportant un corps se prolongeant dans l'alvéole (131).

5. Véhicule selon la revendication 4, **caractérisé en ce que** le pion est une vis (15) et le corps du pion est un écrou (16) fixé sur la tôle d'appui (14) et dans lequel la vis (15) est vissée.

## Claims

1. Vehicle, comprising a cabin post (2) and a door (1), the door (1) comprising:
- a solid part in the form of a casing (11, 12),
- a belt reinforcement (13) in the form of a light alloy profile which is fastened in the casing in a substantial horizontal direction,
- a bearing plate (14) at one end of the profile (13), the plate being in the vicinity of the cabin post (2),
**characterized in that** the door (1) additionally comprises a stud (15, 16) fastened to the bearing plate (14), the stud (15, 16) comprising a prominent head (151) on the outer side of the casing facing the cabin post (2), the bearing plate being designed to butt against the cabin post (2) and the head (151) of the stud (15, 16) being designed to make an imprint (22) in the cabin post (2) in the event of the casing (11, 12) and the cabin post (2) coming elastically together due to an impact on the vehicle, so as to establish a temporary connection during the impact between the door (1) and the cabin post (2).

2. Vehicle according to Claim 1, **characterized in that** the door (1) is a front door.

3. Vehicle according to Claim 1, **characterized in that** the head (151) of the stud is curved.

4. Vehicle according to Claim 1, **characterized in that** the belt reinforcement (13) comprises at least one cell (131), the stud comprising a body extending into the cell (131).

5. Vehicle according to Claim 4, **characterized in that** the stud is a screw (15) and the body of the stud is a nut (16) which is fastened to the bearing plate (14) and into which the screw (15) is screwed.

## Patentansprüche

1. Kraftfahrzeug, das eine Fahrgastzellensäule (2) und eine Tür (1) aufweist, wobei die Tür (1) aufweist:
- einen massiven Bereich in Form eines Kastens (11, 12),
- eine Bandverstärkung (13) aus einem Profilteil aus Leichtmetalllegierung, das im Kasten in einer im Wesentlichen waagerechten Richtung befestigt ist,
- ein Auflageblech (14) an einem Ende des Profilteils (13), wobei das Blech sich in der Nähe der Fahrgastzellensäule (2) befindet,
**dadurch gekennzeichnet, dass** die Tür (1) außerdem einen Flachstift (15, 16) aufweist, der am Auflageblech (14) befestigt ist, wobei der Flachstift (15, 16) einen auf der Seite außerhalb des Kastens gegenüber der Fahrgastzellensäule (2) vorstehenden Kopf (151) aufweist, wobei das Auflageblech in der Lage ist, einen Anschlag gegen die Fahrgastzellensäule (2) zu bilden und der Kopf (151) des Flachstifts (15, 16) in der Lage ist, bei einer elastischen Annäherung des Kastens (11, 12) und der Fahrgastzellensäule (2) aufgrund eines Aufpralls auf das Fahrzeug einen Eindruck (22) in der Fahrgastzellensäule (2) zu bilden, um beim Aufprall eine kurzfristige Verbindung zwischen der Tür (1) und der Fahrgastzellensäule (2) herzustellen.

2. Fahrzeug nach Anspruch 1, **dadurch gekennzeichnet, dass** die Tür (1) eine Vordertür ist.

3. Fahrzeug nach Anspruch 1, **dadurch gekennzeichnet, dass** der Kopf (151) des Flachstifts gewölbt ist.

4. Fahrzeug nach Anspruch 1, **dadurch gekennzeichnet, dass** die Bandverstärkung (13) mindestens eine Aushöhlung (131) aufweist, während der Flachstift einen Körper aufweist, der sich in die Aushöhlung (131) verlängert.

5. Fahrzeug nach Anspruch 4, **dadurch gekennzeichnet, dass** der Flachstift eine Schraube (15) und der Körper des Flachstifts eine Mutter (16) ist, die auf dem Auflageblech (14) befestigt ist und in die die Schraube (15) geschraubt ist.
